# EUROPÄISCHE PATENTANMELDUNG

(11) **EP 4 497 640 A1**
(43) Veröffentlichungstag der Anmeldung: **29.01.2025**
(21) Anmeldenummer: 24178508.8
(22) Anmeldetag: 28.05.2024
(51) Int. Cl.: B60S 1/04, B60S 1/08, B60S 1/28, A01D 41/12, B60S 1/56, B60S 1/58

(54) **LANDWIRTSCHAFTLICHE ARBEITSMASCHINE**

(30) Priorität: 28.07.2023 DE 102023120124
(71) Anmelder: CLAAS Selbstfahrende Erntemaschinen GmbH, 33428 Harsewinkel (DE)
(72) Erfinder: Jeppe, Eckehardt, 34289 Zierenberg (DE); Galland, Stefan, 33428 Harsewinkel (DE)
(74) Vertreter: CLAAS 365FarmNet GmbH

(57) **Zusammenfassung**

Die Erfindung betrifft eine Landwirtschaftliche Arbeitsmaschine (1), insbesondere Feldhäcksler (2), mit einer Kabine (3) und einer Wischeranlage (17) zur Reinigung mehrerer Scheiben (12, 13, 16) der Kabine (3), umfassend eine Mehrzahl von Scheibenwischern (18, 19, 20) und eine Steuerungseinrichtung (22) die zum Ansteuern der Wischeranlage (17) mit unterschiedlichen Scheibenwischzuständen (27, 30, 32, 33) vorgesehen und eingerichtet ist, und eine Eingabeeinheit (7) zum Einstellen zumindest eines Parameters von zumindest einem der Scheibenwischerzustände (27, 30, 32, 33), wobei zumindest in einem ersten Scheibenwischerzustand (27) ein Parameter eine von zumindest einem der Scheibenwischer (18, 19, 20) anzufahrenden Position ist.

## Beschreibung

Die Erfindung betrifft eine landwirtschaftliche Arbeitsmaschine gemäß dem Oberbegriff des Anspruchs 1.

Eine landwirtschaftliche Arbeitsmaschine kann beispielsweise als Mähdrescher, Feldhäcksler oder als Traktor ausgebildet sein. Derartige umfassen eine Kabine von der aus ein Bediener die Arbeitsmaschine führt. Es ist aus dem Stand der Technik hinreichend bekannt, dass die Kabine eine Wischeranlage zur Reinigung der Scheiben bei Regen und/oder Verunreinigungen aufweist.

So ist beispielsweise aus der EP 4 122 738 A1 ein Mähdrescher mit einer Kabine und einer Wischeranlage bekannt geworden. Der Mähdrescher umfasst in der Kabine eine als Display ausgebildete Eingabeeinheit, die zum Aktivieren oder Deaktivieren der Wischeranlage eingerichtet ist. Weiterhin ist mittels der Eingabeeinheit eine Geschwindigkeit der Scheibenwischer einstellbar.

Beim Feldbetrieb beanspruchen die Vielzahl der Arbeitsaggregate der landwirtschaftlichen Arbeitsmaschinen die Aufmerksamkeit des Bedieners. Zugleich umfasst die Kabine eine Mehrzahl von Scheibenwischern die den Seitenscheiben, der Heckscheibe und der Frontscheibe zugeordnet sind. Eine Wischbewegung der Scheibenwischer kann bei der Überwachung der Arbeitsaggregate als besonders störend empfunden werden. Zusätzlich kann durch die Scheibenwischer das Sichtfeld auf ein zu überwachendes Arbeitsaggregat negativ beeinflusst werden.

Es ist deshalb Aufgabe der Erfindung, die beschriebenen Nachteile des Standes der Technik zu vermeiden und insbesondere eine Wischeranlage zu schaffen, die eine komfortablere Führung einer landwirtschaftlichen Arbeitsmaschine ermöglicht.

Diese Aufgabe wird erfindungsgemäß durch die kennzeichnenden Merkmale des Anspruchs 1 gelöst.

Gemäß dem Anspruch 1 wird eine Landwirtschaftliche Arbeitsmaschine vorgeschlagen, insbesondere Feldhäcksler, mit einer Kabine und einer Wischeranlage zur Reinigung mehrerer Scheiben der Kabine, wobei die Wischeranlage eine Mehrzahl von Scheibenwischern und eine Steuerungseinrichtung umfasst, die zum Ansteuern der Wischeranlage mit unterschiedlichen Scheibenwischzuständen vorgesehen und eingerichtet ist, weiterhin umfassend eine Eingabeeinheit zum Einstellen zumindest eines Parameters von zumindest einem der Scheibenwischerzustände, wobei zumindest in einem ersten Scheibenwischerzustand ein Parameter eine von zumindest einem der Scheibenwischer anzufahrende Position ist.

Die Erfindung hat viele Vorteile. Dadurch, dass die Position, in der sich ein Scheibenwischer befindet oder die von dem Scheibenwischer angefahren wird, einen einstellbaren Parameter bildet, wird dem Bediener ermöglicht das Anfahren von störenden Positionen durch einen der Scheibenwischer abzustellen. Hierdurch wird der Komfort beim Führen der Arbeitsmaschine deutlich erhöht. Weiterhin kann eine im Sichtfeld befindliche Position eines Scheibenwischers auf zu überwachende Arbeitsorgane vermieden werden.

Hierbei ist es besonders vorteilhaft, wenn der erste Scheibenwischerzustand ein Ruhezustand des zumindest einen Scheibenwischers ist und die anzufahrende Position eine Parkposition ist. Im Ruhezustand verweilen die Scheibenwischer in der Parkposition. Mithin ist es besonders vorteilhaft, wenn der Bediener die Parkposition einstellen kann, sodass sich die Scheibenwischer in der Parkposition nicht im Sichtfeld des Bedieners bzw. eines zu überwachenden Arbeitsaggregats befinden.

Eine vorteilhafte Weiterbildung sieht vor, dass ein zweiter Scheibenwischerzustand ein Wischbetrieb zumindest eines Scheibenwischers ist, wobei die Steuerungseinrichtung die Wischeranlage derart ansteuert, so dass zumindest ein Scheibenwischer zwischen zwei Endlagen pendelt, wobei die Positionen der Endlangen an der Eingabeeinheit einstellbare Parameter bilden. Gemäß dieser Weiterbildung kann ein Wischbereich des Scheibenwischers bedarfsweise eingestellt werden um gezielt einen Bereich zu wischen, der zur Überwachung der Arbeitsmaschine relevant ist.

Eine weitere vorteilhafte Weiterbildung sieht vor, dass ein dritter Scheibenwischerzustand ein Intervallwischbetrieb zumindest eines Scheibenwischers ist und ein einstellbarer Parameter eine Intervalllänge ist, wobei vorzugsweise die Intervalllänge die Dauer einer Pause zwischen einem Wischzyklus ist.

In besonders bevorzugter Weise kann die Steuerungseinrichtung zum Ansteuern zumindest eines zweiten Scheibenwischers in einem Intervallwischbetrieb vorgesehen und eingerichtet sein, wobei die Steuerungseinrichtung derart eingerichtet ist, dass die zumindest zwei im Intervallwischbetrieb angesteuerten Scheibenwischer synchron betrieben werden. Eine synchrone Ansteuerung der Scheibenwischer bewirkt, dass diese zeitgleich ihre Endlagen erreichen und wieder verlassen. Ein derartiger synchroner Betrieb wird als weniger störend von einem Bediener der Arbeitsmaschine empfunden.

Eine vorteilhafte Ausgestaltung sieht vor, dass die Kabine eine Frontscheibe mit einem Frontscheibenwischer, eine Heckscheibe mit einem Heckscheibenwischer und zwei einander gegenüberliegend angeordnete Seitenscheiben mit jeweils einem Seitenscheibenwischer umfasst, wobei in einem vierten Scheibenwischerzustand die Steuerungseinrichtung die Wischeranlage derart ansteuert, so dass zumindest die Seitenscheibenwischer in Abhängigkeit eines Betriebszustands eines Arbeitsorgans aktiviert und/oder deaktiviert werden, wobei vorzugsweise das Arbeitsorgan eine Überladeeinrichtung der Arbeitsmaschine ist und die Seitenscheibenwischer in Abhängigkeit einer Position der Überladeeinrichtung aktiviert oder deaktiviert werden. Hierdurch wird lediglich ein Scheibenwischer zur Reinigung einer sich im Sichtfeld des Bedieners auf das Arbeitsorgan befindlichen Scheibe automatisch aktiviert. Die weiteren Scheibenwischer bleiben deaktiviert und erzeugen somit keine durch die Wischbewegung generierten Geräusche.

Eine weitere vorteilhafte Ausgestaltung sieht vor, dass die Kabine eine Tür umfasst, wobei die Steuerungseinrichtung derart eingerichtet ist, so dass diese beim Öffnen der Tür zumindest einen Scheibenwischer, vorzugsweise sämtliche Scheibenwischer deaktiviert.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische und exemplarische Frontansicht einer selbstfahrenden landwirtschaftlichen Arbeitsmaschine in Gestalt eines Feldhäckslers;
- Figur 2: eine perspektivische Ansicht einer Kabine einer landwirtschaftlichen Arbeitsmaschine;
- Figur 3: eine schematisch dargestellte Steuereinheit mit einer Eingabeeinheit und Bedienelementen zum Ansteuern der Wischeranlage einer landwirtschaftlichen Arbeitsmaschine.

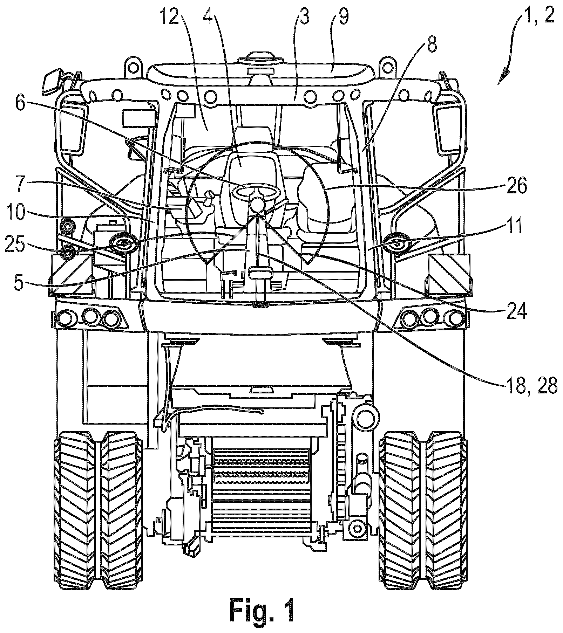

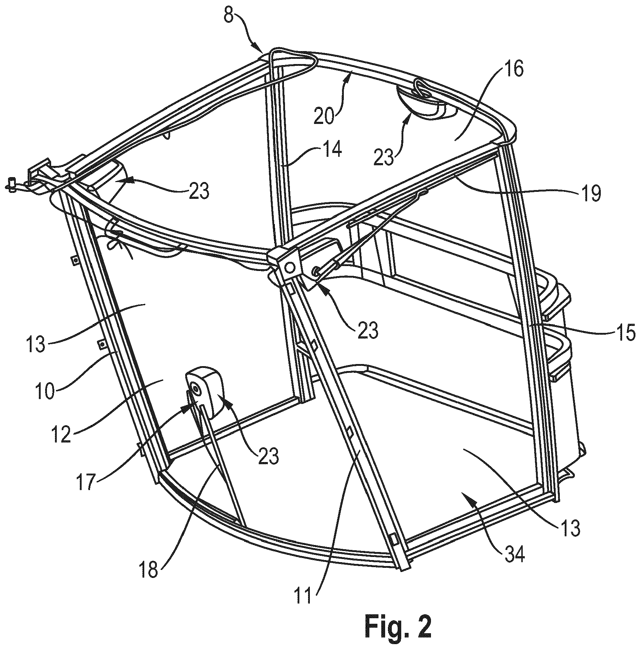

Figur 1 zeigt eine schematische und exemplarische Darstellung einer landwirtschaftlichen Arbeitsmaschine 1 in Gestalt eines Feldhäckslers 2, dessen grundsätzlicher Aufbau bekannt ist. Die landwirtschaftliche Arbeitsmaschine 1 umfasst demnach eine Mehrzahl an Arbeitsaggregaten, die dem Antrieb der landwirtschaftlichen Arbeitsmaschine 1, der Ernte von auf einer landwirtschaftlichen Fläche angebauten Erntegut und der Verarbeitung des geernteten Ernteguts dienen. Zur Steuerung sowie allgemeinen Überwachung eines Betriebs der landwirtschaftlichen Arbeitsmaschine 1 umfasst selbige eine erfindungsgemäße Kabine 3, in der ein - in den FIGs. nicht dargestellter - Bediener auf einem Fahrersitz 4 Platz nehmen kann. Die Kabine 3 umfasst neben dem Fahrersitz 4 weiterhin eine Lenksäule 5 mit einem Lenkrad 6 zur Steuerung der landwirtschaftlichen Arbeitsmaschine 1 und eine Eingabeeinheit 7, mittels der der Bediener Eingaben, insbesondere solche betreffend den Betrieb der landwirtschaftlichen Arbeitsmaschine 1, vornehmen kann. Ferner umfasst die Kabine 3 eine Tragstruktur 8, von der in FIG. 1 ein Dach 9 sowie zwei Tragsäulen 10, 11, sogenannte A-Säulen der Tragstruktur 8, dargestellt sind. Zwischen den Tragsäulen 10, 11 erstreckt sich in Querrichtung der landwirtschaftlichen Erntemaschine 1 eine Frontscheibe 12, die einen vorderen räumlichen Abschluss der Kabine 3 bildet. Neben der Frontscheibe 12 umfasst die Kabine 1 an ihren Seiten jeweils eine - in FIG. 2 dargestellte - Seitenscheibe 13 wobei sich die Seitenscheiben 13 zwischen einer jeweiligen Tragsäule 10, 11 und einer zugeordneten hinteren Tragsäule 14, 15 eine sogenannte B-Säule der Tragstruktur 8, erstrecken, sowie eine Heckscheibe 16 wobei sich die Heckscheibe 16 zwischen den hinteren Tragsäulen 14, 15 erstreckt.

Die Kabine 3 umfasst weiterhin eine Wischeranlage 17 zur Reinigung der Scheiben 12, 13, 16 der Kabine 3. Wie in der Fig. 2 zu sehen ist, umfasst die Wischeranlage 17 mehrere Scheibenwischer 18, 19, 20 wobei ein Frontscheibenwischer 18 der Frontscheibe 12, ein Heckscheibenwischer 20 der Heckscheibe 16 und jeweils ein Seitenscheibenwischer 19 einer Seitenscheibe 13 zugeordnet ist. In Fig. 2 sind der in Vorwärtsfahrtrichtung der Arbeitsmaschine 1 betrachtete rechte Seitenscheibenwischer 19 und der Heckscheibenwischer 20 von der Tragstruktur 8 der Kabine 3 verdeckt.

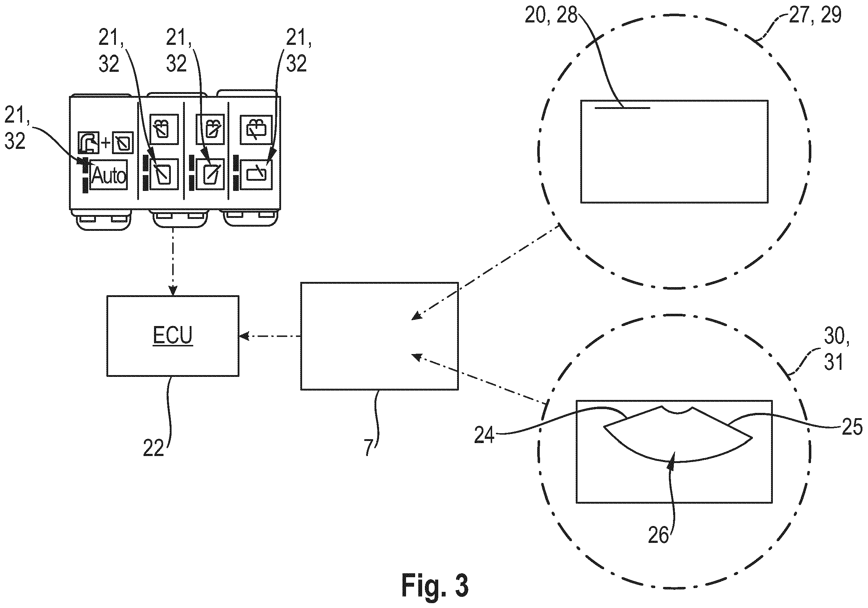

In Fig. 3 ist die in der Kabine 3 angeordnete Eingabeeinheit 7 dargestellt. Die Eingabeeinheit 7 umfasst hier und vorzugsweise ein Touchdisplay. Eine Steuerungseinrichtung 22 ist zur Ansteuerung der Wischeranlage 17 vorgesehen und eingerichtet. Hierbei kann die Steuerungseinrichtung 22 eine den jeweiligen Scheibenwischern 18, 19, 20 zugeordneten Antriebseinheit 23 Aktivieren oder Deaktivieren, wobei im aktivierten Zustand einer Antriebseinheit 23, ein der aktivierten Antriebseinheit 23 zugeordneter Scheibenwischer 18, 19, 20 eine schwenkende Bewegung zwischen zwei Endlagen 24, 25 durchführt und einen Wischbereich 26 zur Reinigung der jeweiligen Scheibe 12, 13 16 überstreicht. Die Steuerungseinrichtung 22 ist in noch näher zu erläuternder Weise zum Ansteuern der Scheibenwischer 18, 19, 20 mit unterschiedlichen Scheibenwischerzuständen 27, 30, 32, 33 vorgesehen und eingerichtet.

Ein erster Scheibenwischerzustand 27 ist hierbei beispielsweise ein Ruhezustand, wobei sich der jeweilige im Ruhezustand befindliche Scheibenwischer 18, 19, 20 in seiner Parkposition 28 befindet, bzw. in die Parkposition 28 verfahren wird. Die Parkposition 28, in welchem der jeweilige Scheibenwischer 18, 19, 20 im deaktivierten Zustand verbleibt, ist erfindungsgemäß in der Eingabeeinheit 7 einstellbar. Fig. 3 zeigt dies exemplarisch für den Heckscheibenwischer 20. In der Eingabeeinheit 7 ist ein Menü zum Einstellen der Parkposition 28 hinterlegt. Beim Aufrufen dieses Menüs wird beispielsweise eine in Fig. 3 gestrichelt eingekreiste Ansicht 29 zum Einstellen der Parkposition 28 angezeigt. In dieser Ansicht 29 kann der Bediener den Scheibenwischer 20 innerhalb eines von dem Scheibenwischer 20 erreichbaren Schwenkbereichs, vorzugsweise mittels Berührung der als Touchdisplay ausgebildeten Eingabeeinheit 7, verschieben und somit die im Ruhezustand des Scheibenwischers 20 anzufahrende Parkposition 28 einstellen.

Ein zweiter Scheibenwischerzustand 30 ist ein Wischbetrieb zumindest eines Scheibenwischers 18, 19, 20. Vorzugsweise kann jeder der Scheibenwischer 18, 19, 20 jeweils im Wischbetrieb betrieben werden. Im Wischbetrieb steuert die Steuerungseinrichtung 22 die Wischeranlage 17 derart an, so dass der zumindest eine im Wischbetrieb befindliche Scheibenwischer 18, 19, 20 zwischen zwei Endlagen 24, 25 pendelt. Der zwischen den Endlagen 24, 25 befindliche und von dem Scheibenwischer 18, 19, 20 überstrichene Bereich bildet den Wischbereich 26. Die Eingabeeinheit 7 ist zum Einstellen des Wischbereichs 26 zumindest eines Scheibenwischers 18, 19, 20, vorzugsweise der Seitenscheibenwischer 19, weiter vorzugsweise des Heckscheibenwischers 20, vorgesehen und eingerichtet. Ferner kann es auch bevorzugt sein, wenn ein Wischbereich 26 des Frontscheibenwischers 18 einstellbar ist. In der Eingabeeinheit 7 ist ein Menü zum Einstellen des Wischbereichs 26 hinterlegt. Beim Aufrufen dieses Menüs wird beispielsweise eine in Fig. 3 gestrichelt eingekreiste Ansicht 31 zum Einstellen des Wischbereichs 26 angezeigt. Die in Fig. 3 gestrichelt dargestellte Ansicht 31 ist exemplarisch zum Einstellen eines Wischbereichs 26 des Heckscheibenwischers 20. In dieser Ansicht 31 kann der Bediener die Position der Endbereiche 24, 25 zum Einstellen des Wischbereichs 26 innerhalb eines von dem Scheibenwischer 20 erreichbaren Schwenkbereichs, vorzugsweise mittels Berührung der als Touchdisplay ausgebildeten Eingabeeinheit 7, verschieben.

Ein dritter Scheibenwischerzustand 32 ist ein Intervallwischbetrieb zumindest eines Scheibenwischers 18, 19, 20. Besonders bevorzugt sind zumindest die Seitenscheibenwischer 19 und der Heckscheibenwischer 20 im Intervallwischbetrieb betreibbar. Ein im Intervallbetrieb befindlichen Scheibenwischer 18, 19, 20 wird von der Steuerungseinrichtung 22 derart angesteuert, sodass dieser einen Wischzyklus durchführt und nach einem jeweiligen Wischzyklus im Stillstand pausiert, wobei die zeitliche Dauer der Pause einen einstellbaren Parameter bildet. Hierbei ist als ein Wischzyklus eine Schwenkbewegung eines Scheibenwischers 18, 19, 20 von einer Endlage 25 hin zu der gegenüberliegenden Endlage 24 und wieder zurück zu verstehen. Die Eingabeeinheit 7 ist zum Einstellen der Intervalllänge, welche einer zeitlichen Dauer der Pause entspricht, vorgesehen und eingerichtet. Hierfür ist in der Eingabeeinheit 7 ein in den Figuren nicht näher dargestelltes Menü aufrufbar in dem eine zeitliche Dauer ausgewählt oder eingegeben werden kann.

Zusätzlich zu der Eingabeeinheit 7 umfasst die Kabine 3 mehrere Bedienelemente 21, die als Tasten ausgeführt sind. Mittels der Bedienelemente 21 kann zumindest ein Scheibenwischerzustand 27, 30, 32 aktiviert oder deaktiviert werden. Besonders bevorzugt ist es, wenn die Intervallwischfunktion bzw. der dritte Scheibenwischerzustand 23 der Seitenscheibenwischer 19 und der Heckscheibenwischer 20 jeweils mittels eines Bedienelements 21 aktivierbar und/oder deaktivierbar ist. Hierbei kann vorgesehen sein, dass bei einmaliger Betätigung des jeweiligen Bedienelements 21 ein erster Intervallbetrieb und bei nochmaliger Betätigung des jeweiligen Bedienelements 21 ein zweiter Intervallbetrieb aktiviert wird, wobei sich der erste und zweite Intervallbetrieb durch die zeitliche Dauer der Pause unterscheiden.

Hier und vorzugsweise ist die Steuerungseinrichtung 22 zum gleichzeitigen Ansteuern von zumindest zwei, vorzugsweise drei Scheibenwischern 19, 20 in dem dritten Scheibenwischerzustand 32 vorgesehen und eingerichtet, wobei es sich vorzugsweise um die Seitenscheibenwischer 19 und den Heckscheibenwischer 20 handelt. Hierbei steuert die Steuerungseinrichtung 22 sämtliche in dem dritten Scheibenwischerzustand 32 befindlichen Scheibenwischer 19, 20 synchron an, so dass diese gleichzeitig ihre jeweiligen Endlangen 24, 25 erreichen und verlassen.

Weiterhin ist in der Steuerungseinrichtung 22 ein vierter Scheibenwischerzustand 33 hinterlegt. In dem vierten Scheibenwischerzustand 33 steuert die Steuerungseinrichtung 22 die Wischeranlage 17 derart an, so dass die Seitenscheibenwischer 19 und vorzugsweise auch der Heckscheibenwischer 20 in Abhängigkeit eines Betriebszustands eines Arbeitsorgans betätigt werden. Der Betriebszustand kann die Ausrichtung oder Position des Arbeitsorgans umfassen. Bei dem Arbeitsorgan kann es sich bevorzugt um eine an sich bekannte und hier nicht näher dargestellte Überladeeinrichtung einer als Feldhäcksler 2 ausgeführten landwirtschaftlichen Arbeitsmaschine 1 handeln. Derartige Überladeeinrichtungen sind zum Überladen des von dem Feldhäcksler 2 aufgenommenen und verarbeiteten Ernteguts auf ein Überladefahrzeug vorgesehen und eingerichtet. Beim Überladen kann sich das Überladefahrzeug beispielsweise rechtsseitig oder linksseitig neben dem Feldhäcksler 2 oder heckseitig hinter dem Feldhäcksler 2 befinden, wobei die Überladeeinrichtung entsprechend der Position des Überladefahrzeugs ausgerichtet ist. In dem vierten Scheibenwischerzustand 33 ist die Steuerungseinrichtung 22 dazu vorgesehen und eingerichtet in Abhängigkeit der Position bzw. Ausrichtung der Überladeeinrichtung einen der Scheibenwischer 19, 20 automatisch zu aktivieren, um eine im Sichtfeld des Bedieners auf die Überladeeinrichtung befindliche Scheibe 13, 16 zu wischen. Weiterhin kann die Steuerungseinrichtung 22 bei einer Positionsänderung der Überladeeinrichtung einen Scheibenwischer 19, 20 der einer Scheibe 13, 16 zugeordnet ist automatisch deaktivieren, wenn sich die Scheibe 13, 16 infolge der Positionsänderung nicht mehr im Sichtfeld des Bedieners auf die Überladeeinrichtung befindet. Zum Aktivieren des vierten Scheibenwischerzustands 33 ist in der Kabine 3 ein als Taste ausgebildetes Bedienelement 21 angeordnet.

Weiterhin kann eine der Seitenscheiben 13 in einer Tür 34 zum Betreten der Kabine 3 angeordnet sein. Die Tür 34 ist in Fig. 3 lediglich durch den Pfeil mit dem Bezugszeichen 34 angedeutet und nicht näher dargestellt. Die Steuerungseinrichtung 22 ist derart eingerichtet, so dass diese beim Öffnen der Tür 34 zumindest den türseitigen Seitenscheibenwischer 19 automatisch deaktiviert. Ferner können beim Öffnen der Tür 34 auch sämtliche Scheibenwischer 18, 19, 20 automatisch deaktiviert werden.

### Bezugszeichenliste:

- 1: Landwirtschaftliche Arbeitsmaschine 34 Tür
- 2: Feldhäcksler
- 3: Kabine
- 4: Fahrersitz
- 5: Lenksäule
- 6: Lenkrad
- 7: Eingabeeinheit
- 8: Tragstruktur
- 9: Dach
- 10: Tragsäule
- 11: Tragsäule
- 12: Frontscheibe
- 13: Seitenscheibe
- 14: Tragsäule
- 15: Tragsäule
- 16: Heckscheibe
- 17: Wischeranlage
- 18: Frontscheibenwischer
- 19: Seitenscheibenwischer
- 20: Heckscheibenwischer
- 21: Bedienelement
- 22: Steuerungseinrichtung
- 23: Antriebseinheit
- 24: Endlage
- 25: Endlage
- 26: Wischbereich
- 27: Erster Scheibenwischerzustand
- 28: Parkposition
- 29: Ansicht
- 30: Zweiter Scheibenwischerzustand
- 31: Ansicht
- 32: Dritter Scheibenwischerzustand
- 33: Vierter Scheibenwischerzustand

## Patentansprüche

1. Landwirtschaftliche Arbeitsmaschine (1), insbesondere Feldhäcksler (2),
mit einer Kabine (3) und einer Wischeranlage (17) zur Reinigung mehrerer Scheiben (12, 13, 16) der Kabine (3),
umfassend eine Mehrzahl von Scheibenwischern (18, 19, 20) und eine Steuerungseinrichtung (22) die zum Ansteuern der Wischeranlage (17) mit unterschiedlichen Scheibenwischzuständen (27, 30, 32, 33) vorgesehen und eingerichtet ist,
und eine Eingabeeinheit (7) zum Einstellen zumindest eines Parameters von zumindest einem der Scheibenwischerzustände (27, 30, 32, 33),
**dadurch gekennzeichnet, dass**
zumindest in einem ersten Scheibenwischerzustand (27) ein Parameter eine von zumindest einem der Scheibenwischer (18, 19, 20) anzufahrende Position ist.

2. Landwirtschaftliche Arbeitsmaschine (1) nach Anspruch 1, **dadurch gekennzeichnet, dass** der erste Scheibenwischerzustand (27) ein Ruhezustand des zumindest einen Scheibenwischers (18, 19, 20) ist und die anzufahrende Position eine Parkposition (28) ist.

3. Landwirtschaftliche Arbeitsmaschine (1) nach einem der Ansprüche 1 oder 2, **dadurch gekennzeichnet, dass** ein zweiter Scheibenwischerzustand (30) ein Wischbetrieb zumindest eines Scheibenwischers (18, 19, 20) ist, wobei die Steuerungseinrichtung (22) die Wischeranlage (17) derart ansteuert, so dass zumindest ein Scheibenwischer (18, 19, 20) zwischen zwei Endlagen (24, 25) pendelt, wobei die Positionen der Endlangen (24, 25) in der Eingabeeinheit (7) einstellbare Parameter bilden.

4. Landwirtschaftliche Arbeitsmaschine (1) nach einem der Ansprüche 1 bis 3, **dadurch gekennzeichnet, dass** ein dritter Scheibenwischerzustand (32) ein Intervallwischbetrieb zumindest eines Scheibenwischers (18, 19, 20) ist und ein einstellbarer Parameter eine Intervalllänge ist, wobei vorzugsweise die Intervalllänge die Dauer einer Pause zwischen einem Wischzyklus ist.

5. Landwirtschaftliche Arbeitsmaschine (1) nach Anspruch 4, **dadurch gekennzeichnet, dass** die Steuerungseinrichtung (22) zum Ansteuern zumindest eines zweiten Scheibenwischers (18, 19, 20) in einem Intervallwischbetrieb vorgesehen und eingerichtet ist, wobei die Steuerungseinrichtung (22) die Wischeranlage (17) derart ansteuert, sodass die zumindest zwei im Intervallwischbetrieb angesteuerten Scheibenwischer (18, 19, 20) synchron betrieben werden.

6. Landwirtschaftliche Arbeitsmaschine (1) nach einem der Ansprüche 1 bis 5, **dadurch gekennzeichnet, dass** die Kabine (3) eine Frontscheibe (12) mit einem Frontscheibenwischer (18), eine Heckscheibe (16) mit einem Heckscheibenwischer (20) und zwei einander gegenüberliegend angeordnete Seitenscheiben (13) mit jeweils einem Seitenscheibenwischer (19) umfasst, wobei in einem vierten Scheibenwischerzustand (33) die Steuerungseinrichtung (22) die Wischeranlage (17) derart ansteuert, so dass zumindest die Seitenscheibenwischer (19) in Abhängigkeit eines Betriebszustands eines Arbeitsorgans aktiviert und/oder deaktiviert werden, wobei vorzugsweise das Arbeitsorgan eine Überladeeinrichtung der Arbeitsmaschine (1) ist und die Seitenscheibenwischer (19) in Abhängigkeit einer Position der Überladeeinrichtung aktiviert oder deaktiviert werden.

7. Landwirtschaftliche Arbeitsmaschine (1) nach einem der Ansprüche 1 bis 6, **dadurch gekennzeichnet, dass** die Kabine (3) eine Tür (34) umfasst, wobei die Steuerungseinrichtung (22) derart eingerichtet ist, so dass diese beim Öffnen der Tür (34) zumindest einen Scheibenwischer (18, 19, 20), vorzugsweise sämtliche Scheibenwischer (18, 19, 20) deaktiviert.
